(19) Europäisches Patentamt
European Patent Office
Office européen des brevets

(11) **EP 1 818 213 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(51) Int Cl.:
***B60Q 1/115*** *(2006.01)*

(21) Anmeldenummer: **06024505.7**

(22) Anmeldetag: **27.11.2006**

(54) **Steuergerät für einen Fahrzeugscheinwerfer und Verfahren zur Steuerung eines Fahrzeugscheinwerfers**

Vehicle headlamp control device and method for controling a vehicle headlamp

Dispositif de contrôle d'un projecteur de véhicule et méthode de contrôle d'un projecteur de véhicule

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.02.2006 DE 102006006681**
**24.10.2006 DE 102006049977**

(43) Veröffentlichungstag der Anmeldung:
**15.08.2007 Patentblatt 2007/33**

(73) Patentinhaber: **Volkswagen Aktiengesellschaft 38440 Wolfsburg (DE)**

(72) Erfinder:
• **Koppermann, Rolf**
**38444 Wolfsburg (DE)**
• **Witt, Joram**
**31224 Peine (DE)**

(56) Entgegenhaltungen:
**EP-A2- 1 316 474      DE-A1- 10 235 238**
**DE-A1- 10 351 832      DE-A1- 10 354 212**
**DE-T2- 69 710 661      DE-T2- 69 910 461**

## Beschreibung

Die vorliegende Erfindung betrifft ein Steuergerät für einen Fahrzeugscheinwerfer, dessen Lichtemissionsrichtung um eine Achse schwenkbar ist, wobei das Steuergerät als Ausgangssignal einen Schwenkwinkel für die Lichtemissionsrichtung des Fahrzeugscheinwerfers ausgibt. Ferner betrifft die Erfindung ein Verfahren zur Steuerung eines solchen Fahrzeugscheinwerfers.

Bekannt sind Fahrzeugscheinwerfer, deren Leuchtweite reguliert werden kann, indem die Lichtemissionsrichtung des Scheinwerfers um eine horizontale Achse geschwenkt wird. Es ist beispielsweise möglich, den Reflektor oder das ganze Scheinwerfermodul zu schwenken. Für eine automatische Leuchtweitenregulierung eines solchen Scheinwerfers wird die Einfederung des Fahrzeugs, das heißt der Nickwinkel des Fahrzeugs, gemessen. Hierfür werden herkömmlicherweise Höhensensoren an der Vorder- und Hinterachse verwendet, welche den Abstand der jeweiligen Achse von der federnd gelagerten Karosserie messen. Aus diesen Messwerten und dem Achsabstand kann der Nickwinkel des Fahrzeugs berechnet werden.

Des Weiteren ist es bekannt, ergänzend die Sitzbelegung im Fahrzeug zu erfassen und daraus die Lastverteilung abzuleiten. Schließlich ist es bekannt, die aktuelle Geschwindigkeit des Fahrzeugs zu erfassen und daraus Rückschlüsse auf die Fahrsituation zu ziehen.

Aus der JP 2004196212 A ist ein Steuergerät für eine Leuchtweitenregulierung eines Scheinwerfers bekannt, wobei ein Höhensensor, ein Beladungssensor und ein Geschwindigkeitssensor vorgesehen sind. Aus den Signalen des Höhensensors und des Beladungssensors wird ein Schwenkwinkel für den Scheinwerfer berechnet. Aus dem Signal des Geschwindigkeitssensors wird bestimmt, ob eine Leuchtweitenregulierung durchgeführt werden soll.

Aus der DE 102 35 238 A1 ist eine Steuervorrichtung für die Lichtemissionsrichtung eines Fahrzeugscheinwerfers bekannt, bei der die Fahrzeuglage an Hand von Fahrzeughöhenerfassungsmitteln erhalten wird, wobei in einem Speicher Daten, die einen tatsächlichen Fahrzeughöhenwert in einem Referenzzustand der Fahrzeuglage oder eine Differenz zwischen dem Fahrzeughöhenwert und einem Fahrzeughöhenwert für einen bestimmte Fahrzeugtyp angeben, wobei diese Daten bei der Berechnung der Fahrzeuglage berücksichtigt werden. Die Daten in dem Speicher umfassen Steuerlinien für einen Nickwinkel des Fahrzeugs in Abhängigkeit von dem Signal eines Fahrzeughöhensensors an der Hinterachse des Fahrzeugs, die berücksichtigen, ob sich eine Person auf dem Fahrgastsitz befindet oder nicht. Ferner wird die Fahrzeuggeschwindigkeit und Beschleunigung berücksichtigt, um zum Beispiel eine Überkorrektur bei der Leuchtweitenregulierung zu verhindern.

Ähnliche Leuchtweitenregulierungen sind aus der JP 09286274 A, JP 10226271 A, JP2000142213 A, JP 10230777 A, JP 11034732 A, JP 2004168130 A, US 6,229,263 B1 und der DE 40 05 812 C1 bekannt. Schließlich ist aus der DE 697 07 047 T2 eine Einrichtung zur automatischen Steuerung der optischen Achse eines KFZ-Scheinwerfers bekannt, bei welcher der Schwenkwinkel aus dem Signal eines Höhensensors bei der Hinterachse des Fahrzeugs und den Federkonstanten der Federung für die Vorder- und für die Hinterachse berechnet wird.

In der DE 103 54 212 A1 ist eine Steuerungsvorrichtung für die Beleuchtungsrichtung eines Fahrzeugscheinwerfers beschrieben, die eine Beleuchtungsrichtung des Scheinwerfers für das Fahrzeug in Abhängigkeit von einer Änderung der Lage des Fahrzeugs steuert.

Aus der DE 697 10 661 T2 ist eine Beleuchtungsschaltungsanordnung einer Entladungslampe für ein Automobil beschrieben, welche eine Schaltungsanordnung zum Steuern des Leuchtbetriebs der Entladungslampe umfasst und eine Schaltungsanordnung, welche elektrisch mit der ersten Schaltungsanordnung verbunden ist. Die zweite Schaltungsanordnung enthält eine Höheneinstellanordnung zum Regeln der Lichtverteilung. Dabei werden Sensorinformationen von Höhensensoren empfangen und eine Berechnung des Fahrzeuganstellwinkels durchgeführt.

Schließlich ist auch aus der EP 1 316 474 A2 ein automatisches Steuersystem für einen Fahrzeugscheinwerfer bekannt, welches Änderungen der Betriebsbedingungen des Fahrzeugs berücksichtigt.

Es ist die Aufgabe der vorliegenden Erfindung, ein Steuergerät und ein Verfahren der eingangs genannten Art bereitzustellen, mit denen der Schwenkwinkel für die Lichtemissionsrichtung eines Fahrzeugscheinwerfers kostengünstig und genau bestimmt werden kann.

Diese Aufgabe wird durch ein Steuergerät mit den Merkmalen des Anspruchs 1 und ein Verfahren mit den Merkmalen des Anspruchs 7 gelöst. Vorteilhafte Aus- und Weiterbildungen ergeben sich aus den Unteransprüchen.

Das erfindungsgemäße Steuergerät umfasst einen Speicher, in dem im Voraus gewonnene fahrsituationsabhängige Daten gespeichert sind, welche Schwenkbewegungen des Fahrzeugs in Abhängigkeit von der Fahrzeuggeschwindigkeit und zumindest der ersten zeitlichen Ableitung der Fahrzeuggeschwindigkeit charakterisieren, wobei das Ausgangssignal in Abhängigkeit von den im Voraus gespeicherten Daten berechenbar ist. Die in dem Speicher gespeicherten Daten können insbesondere im Voraus für ein Fahrzeugmodel empirisch gewonnen werden.

Mit dem erfindungsgemäßen Steuergerät ist es möglich, Sensoren, welche Schwenkbewegungen beziehungsweise einen Schwenkzustand des Fahrzeugs erfassen, einzusparen. Es können insbesondere solche Sensoren eingespart werden, die Schwenkbewegungen erfassen, welche auf eine bestimmte Geschwindigkeit oder Beschleunigung des Fahrzeugs zurückzuführen sind, da der Schwenkzustand oder ein entsprechender Korrekturwinkel für die Lichtemissionsrichtung direkt aus dem Speicher ausgelesen werden kann oder mit den Daten des Speichers berechnet werden kann, ohne dass gesonderte Sensoren erforderlich sind. Hierdurch können Kosten eingespart werden, da es sehr viel günstiger ist, für jedes Fahrzeugmodell im Voraus die Schwenkbewegungen in Abhängigkeit von der Fahrzeuggeschwindigkeit und Beschleunigung zu messen und diese Daten in dem Speicher des Steuergeräts zu speichern, als Sensoren in das Fahrzeug einzubauen, welche aktuell die Schwenkbewegungen erfassen.

Die im Voraus gewonnenen Daten charakterisieren die Schwenkbewegungen des Fahrzeugs um eine zu der Schwenkachse der Lichtemissionsrichtung parallelen Achse. Die Lichtemissionsrichtung ist für eine Leuchtweitenregulierung um eine horizontale zur Fahrtrichtung senkrechten Achse schwenkbar und die im Voraus gewonnenen Daten charakterisieren die Nickbewegungen des Fahrzeugs um eine horizontale zur Fahrtrichtung senkrechten Achse.

Gemäß einer weiteren bevorzugten Ausbildung des erfindungsgemäßen Steuergeräts hängen die im Voraus gewonnenen Daten ferner von der zweiten und/oder weiteren zeitlichen Ableitung(en) der Fahrzeuggeschwindigkeit ab. Das Ausgangssignal ist in diesem Fall in Abhängigkeit von den gespeicherten Daten berechenbar, die der aktuellen zweiten und/oder weiteren zeitlichen Ableitung(en) der Fahrzeuggeschwindigkeit zugeordnet sind. Durch die Berücksichtigung früherer zeitlicher Ableitungen als der Beschleunigung, ist es möglich, das Fahrzeugverhalten bei Geschwindigkeitsveränderungen noch genauer zu charakterisieren und damit die Schwenkbewegungen der Lichtemissionsrichtung noch besser an diese Schwenkbewegungen anzupassen.

Gemäß einer weiteren bevorzugten Ausbildung des erfindungsgemäßen Steuergerätes ist dieses mit Sensoren gekoppelt, mit denen statische Daten aktuell erfassbar sind. Das Ausgangssignal ist in diesem Fall ferner in Abhängigkeit von den aktuellen statischen Daten dieser Sensoren berechenbar. Mit den Sensoren können Änderungen des Schwenkzustands des Fahrzeugs detektiert werden, die von der Fahrzeuggeschwindigkeit und deren Ableitungen unabhängig sind. Die Sensoren umfassen zum Beispiel einen einzigen Höhensensor des Fahrzeugs, der vorzugsweise den Federweg bei der Hinterachse erfasst. Durch diesen Höhensensor kann die Beladung des Fahrzeugs sowie die Ladungsverteilung bei der Berechung des Schwenkwinkels für die Lichtemissionsrichtung des Scheinwerfers berücksichtigt werden. Ferner können die Sensoren Sitzbelegungssensoren umfassen. Mittels der Sitzbelegungssensoren kann die Gewichtsverteilung im Fahrzeug auf Grund der Fahrzeuginsassen bestimmt und bei der Berechnung des Schwenkwinkels für die Lichtemissionsrichtung berücksichtig werden.

Bei dem erfindungsgemäßen Steuergerät setzt sich der von dem Steuergerät berechnete Schwenkwinkel für die Leuchtweitenregulierung aus einem statischen Neigungswinkel, der sich aus der Höhe bei der Hinterachse des Fahrzeugs ergibt, und einem dynamischen Korrekturwinkel, der sich aus der Geschwindigkeit und zumindest einer zeitlichen Ableitung der Geschwindigkeit durch Verwendung der im Voraus gespeicherten Daten ergibt, zusammen. Ferner wird noch ein statischer Korrekturwinkel, der sich aus der Sitzbelegung des Fahrzeugs ergibt, berücksichtigt.

Bei dem erfindungsgemäßen Verfahren zur Steuerung eines Fahrzeugscheinwerfers, dessen Lichtemissionsrichtung um eine Achse schwenkbar ist, werden im Voraus fahrsituationsabhängige Daten, welche Schwenkbewegungen des Fahrzeugs in Abhängigkeit von der Fahrgeschwindigkeit und von zumindest der ersten zeitlichen Ableitung der Fahrzeuggeschwindigkeit, das heißt der Fahrzeugbeschleunigung, charakterisieren, gewonnen und in einem im Fahrzeug vorgesehenen Speicher gespeichert. Der Schwenkwinkel für die Lichtemissionsrichtung des Fahrzeugscheinwerfers wird dann in Abhängigkeit von den im Voraus gespeicherten Daten berechnet. Diese Daten können insbesondere im Voraus für ein Fahrzeugmodell empirisch gewonnen werden.

Die im Voraus gewonnenen Daten charakterisieren insbesondere die Schwenkbewegungen des Fahrzeugs um eine zu der Schwenkachse der Lichtemissionsrichtung parallelen Achse.

Das erfindungsgemäße Verfahren wird für eine Leuchtweitenregulierung eingesetzt, bei der die Lichtemissionsrichtung um eine horizontale, zur Fahrtrichtung senkrechten Achse geschwenkt wird. In diesem Fall charakterisieren die im Voraus gewonnenen Daten insbesondere die Nickbewegungen des Fahrzeugs um eine horizontale, zur Fahrtrichtung senkrechten Achse.

Gemäß einer bevorzugten Weiterbildung des erfindungsgemäßen Verfahrens hängen die im Voraus gewonnenen Daten ferner von der zweiten und/oder weiteren zeitlichen Ableitung(en) der Fahrzeuggeschwindigkeit ab. Bei dem Verfahren wird die zweite und/oder weitere zeitliche Ableitung(en) der Fahrzeuggeschwindigkeit aus dem zeitlichen Verlauf der Fahrzeuggeschwindigkeit berechnet und der Schwenkwinkel wird für die Lichtemission des Fahrzeugscheinwerfers in Abhängigkeit von der gespeicherten Daten berechnet, die der aktuellen zweiten und/oder weiteren zeitlichen Ableitung(en) der Fahrzeuggeschwindigkeit zugeordnet sind.

Bei dem erfindungsgemäßen Verfahren werden statische Daten aktuell erfasst und der Schwenkwinkel wird für die Lichtemissionsrichtung des Fahrzeugscheinwerfers in Abhängigkeit von den aktuellen statischen Daten berechnet. Als statische Daten kann zum Beispiel die Höhe des Fahrzeugs bei der Hinterachse erfasst werden. Ferner kann die Sitzbelegung erfasst werden. Der berechnete Schwenkwinkel kann sich dann aus einem statischen Neigungswinkel, der sich aus dem Federweg der Hinterachse ergibt, und einem dynamischen Korrekturwinkel, der sich aus der Geschwindigkeit und zumindest einer zeitlichen Ableitung der Geschwindigkeit durch Verwendung der im Voraus gespeicherten Daten ergibt, zusammensetzen. Ferner kann ein statischer Korrekturwinkel, der sich aus der Sitzbelegung des Fahrzeugs ergibt, berücksichtigt werden.

Bei dem erfindungsgemäßen Steuergerät bzw. dem erfindungsgemäßen Verfahren kann der statische Korrekturwinkel wie folgt berechnet werden: Der Federweg über der Hinterachse wird in n Abschnitte i unterteilt. Jedem Abschnitt i wird ein Koeffizient $k_{ij}$ zugeordnet, wobei der Index i die Zuordnung zu dem Abschnitt i darstellt und der Index j die Beladungssituation im Fahrgastraum kennzeichnet. Die Beladungssituation hängt insbesondere von der Sitzbelegung des Fahrzeugs ab. Die Koeffizienten $k_{ij}$ stellen somit Gewichtsfaktoren für die Abschnitte i des Federwegs des Fahrzeugs über der Hinterachse dar. Die Koeffizienten $k_{ij}$ werden im Voraus gewonnen und im Speicher abgespeichert. Sie werden insbesondere für jede Fahrzeugbaureihe empirisch im Voraus bestimmt. Ferner wird die Unterteilung des Federwegs in die Abschnitte i im Voraus festgelegt und im Speicher abgespeichert. Der statische Korrekturwinkel $\Delta\alpha_{stat}$ berechnet sich insbesondere wie folgt:

$$\Delta\alpha_{stat} = \sum_{i=1}^{n} k_{ij} \cdot (\Delta S_{HA} - \Delta S_{HA(i)})$$

wobei n die Anzahl der Abschnitte ist, die den Federweg über der Hinterachse aufteilen, $k_{ij}$ der im Voraus bestimmte Koeffizient für den i-ten Federwegabschnitt über der Hinterachse und die j-te Beladungssituation im Fahrgastraum, $\Delta S_{HA}$ die Änderung des Federweges über der Hinterachse ist, wobei $\Delta S_{HA}$ kleiner 0 ist, $\Delta S_{HA}(i)$ die obere Grenze für den i-ten Federwegabschnitt über der Hinterachse ist, wobei, $\Delta S_{HA(i)}$ kleiner 0 ist, i der Index für den Abschnitt des Federwegs über der Hinterachse ist und j der Index für die Beladungssituation im Fahrgastraum ist. Bei der Summenbildung werden jedoch nur solche Abschnitte i berücksichtigt werden, für die gilt, dass

$$\Delta S_{HA} - \Delta S_{HA(i)} \text{ kleiner 0 ist.}$$

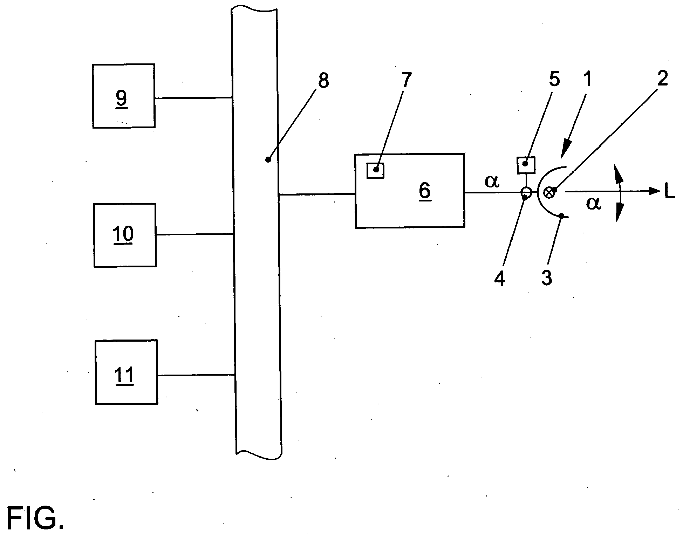

Die Erfindung wird nun an Hand eines Ausführungsbeispiels mit Bezug zu der Zeichnung erläutert. Die Zeichnung zeigt schematisch ein Ausführungsbeispiel des erfindungsgemäßen Steuergeräts, sowie die Einrichtungen, mit denen das Steuergerät direkt oder indirekt verbunden ist.

Als Ausführungsbeispiel wird im Folgenden ein Steuergerät für einen Fahrzeugscheinwerfer mit einer Leuchtweitenregulierung beziehungsweise ein Verfahren zur Steuerung eines Fahrzeugscheinwerfers mit einer Leuchtweitenregulierung beschrieben.

Das Steuergerät 6 ist mit einem an sich bekannten Scheinwerfer 1 verbunden, dessen Leuchtweite von dem Steuergerät 6 gesteuert wird. Der Scheinwerfer 1 umfasst eine Lichtquelle 2 und einen Reflektor 3. Wie bei herkömmlichen Scheinwerfern können noch weitere optische Elemente vorgesehen sein. Die Lichtemissionsrichtung L des Scheinwerfers 1 ist um einen Winkel $\alpha$ nach oben oder nach unten um die horizontale Achse 4 schwenkbar. Es kann beispielsweise das ganze Scheinwerfermodul mittels des Motors 5 um die Achse 4 geschwenkt werden. Die Steuerbefehle hierfür erhält der Motor 5 von dem Steuergerät 6. Das Steuergerät 6 gibt als Ausgangssignal somit einen Schwenkwinkel $\alpha$ aus.

Für die spätere Steuerung des Scheinwerfers 1 werden bei der Herstellung eines neuen Fahrzeugmodells Versuche durchgeführt und daraus empirisch Daten gewonnen, welche die Schwenkbewegungen und den Schwenkzustand des Fahrzeugmodells in Abhängigkeit von der Fahrzeuggeschwindigkeit, der Fahrzeugbeschleunigung und gegebenenfalls weiterer zeitlichen Ableitungen der Geschwindigkeit charakterisieren. Diese im Voraus gewonnenen Daten zeigen somit zum Beispiel an, welche Nickbewegung das Fahrzeug ausführt, wenn es bei einer bestimmten Geschwindigkeit um einen bestimmten Wert beschleunigt wird. Die Daten werden empirisch über einen Geschwindigkeits- und Beschleunigungsbereich gewonnen, der üblicherweise bei Betrieb des Fahrzeugs auftritt. Ferner können aus dem empirisch gewonnenen Daten Kennlinien durch Interpolation gewonnen werden. Im einfachsten Fall wird der Nickwinkel des Fahrzeugs in Abhängigkeit von der Geschwindigkeit und der Beschleunigung angegeben. Um auch Fahrzustände erfassen zu können, bei denen höhere Ableitungen der Fahrzeuggeschwindigkeit auftreten, kann der Nickwinkel auch in Abhängigkeit von diesen höheren Ableitungen im Voraus empirisch bestimmt werden.

Der Nickwinkel des Fahrzeugs hängt neben der Beschleunigung auch von der Beladung und der Lastverteilung im Fahrzeug ab. Diese Parameter führen zu statischen Nickwinkeln, da sie zu einer Veränderung der Nickwinkels bei einem stehenden Fahrzeug führen. Diese statischen Parameter können jedoch auch Einfluss auf die Abhängigkeit des Nickwinkels von der Geschwindigkeit und deren zeitlichen Ableitungen haben. Bei den Versuchen, bei denen die empirischen Daten gewonnen werden, wird daher ein Fahrzeug mit einer mittleren Beladung und einer üblichen Lastverteilung verwendet. Ferner ist es jedoch auch möglich, den Nickwinkel in Abhängigkeit von der Geschwindigkeit, von einer oder mehreren Ableitungen der Geschwindigkeit, von der Beladung, sowie von einer Lastverteilung im Fahrzeug zu gewinnen. Der Nickwinkel stellt sich dann als mehrdimensionale Funktion oder als Matrix dar, die von einer Vielzahl von Parametern abhängig ist.

Die für das Fahrzeugmodell empirisch gewonnenen Daten werden bei der Montage des entsprechenden Fahrzeugmodells in einem Speicher 7 des Steuergeräts 6 für die Leuchtweitenregulierung des Scheinwerfers 1 gespeichert. An Hand dieser im Voraus gewonnenen gespeicherten Daten kann das Steuergerät nun für die Leuchtweitenregulierung einen Schwenkwinkel α für die Lichtemissionsrichtung L des Scheinwerfers 1 berechnen.

Das Steuergerät 6 ist mit einem Fahrzeugbus 8 verbunden, der wiederum mit einer Messeinrichtung 9 für die Fahrzeuggeschwindigkeit, einem Höhensensor 10 und Sitzbelegungssensoren 11 verbunden ist. Der Geschwindigkeitsmesser 9 überträgt fortwährend die aktuelle Fahrzeuggeschwindigkeit an den Fahrzeugbus 8, so dass an Hand dieser Daten die Fahrzeuggeschwindigkeit ausgelesen und die zeitlichen Ableitungen der Fahrzeuggeschwindigkeit berechnet werden können. Der Höhensensor 10 bestimmt den Federweg bei der Hinterachse des Fahrzeugs. Die Sitzbelegungssensoren 11 erfassen, ob eine Person auf einem bestimmten Sitz des Fahrzeugs sitzt. Gegebenenfalls wird auch erfasst, wie schwer diese Person ist. Diese Daten werden auch an den Fahrzeugbus 8 übertragen.

Das Steuergerät 6 kann die von den Einrichtungen 9, 10 und 11 übertragenen Daten auslesen. An Hand des Federwegs bei der Hinterachse des Fahrzeugs bestimmt das Steuergerät unter Berücksichtigung weiterer gespeicherter Fahrzeugparameter einen statischen Neigungswinkel $\alpha_{stat}$, der gegenüber einer Ruhelage auftritt, deren Daten dauerhaft in dem Steuergerät 6 gespeichert sind. Es wird bemerkt, dass nur ein einziger Höhensensor 11 verwendet wird, das heißt insbesondere kein Höhensensor bei der Vorderachse des Fahrzeugs erforderlich ist. Des Weiteren berechnet das Steuergerät 6 an Hand der von den Sitzbelegungssensoren 11 übertragenen Daten einen statischen Korrekturwinkel $\Delta\alpha_{stat}$, welcher den Einfluss der Verteilung der Fahrzeuginsassen auf den Sitzen berücksichtigt. Der statische Korrekturwinkel $\Delta\alpha_{stat}$ kann auch an Hand von im Voraus durchgeführten Versuchen aus den Signalen der Sitzbelegungssensoren 11 ermittelt werden.

Für die Berechnung des statischen Korrekturwinkels $\Delta\alpha_{stat}$ wird der Federweg über der Hinterachse des Fahrzeugs im Voraus in n Abschnitte i unterteilt und für jeden Abschnitt i im Voraus ein Gewichtskoeffizient $k_{ij}$ bestimmt. Der statische Korrekturwinkel $\Delta\alpha_{stat}$ wird dann in Abhängigkeit von dem aktuell von dem Höhensensor 11 gemessenen negativen Federweg $\Delta S_{HA}$ über der Hinterachse wie folgt bestimmt:

$$\Delta\alpha_{stat} = \sum_{i=1}^{n} k_{ij} \cdot (\Delta S_{HA} - \Delta S_{HA(i)})$$

wobei $k_{ij}$ ein im Voraus bestimmter Koeffizient für den i-ten Federwegabschnitt über der Hinterachse und die j-te Beladungssituation im Fahrgastraum, $\Delta S_{HA}$ die Änderung des Federweges über der Hinterachse ist, wobei $\Delta S_{HA}$ kleiner 0 ist, $\Delta S_{HA(i)}$ die obere Grenze für den i-ten Federwegabschnitt über der Hinterachse ist, wobei, $\Delta S_{HA(i)}$ kleiner 0 ist, i der Index für den Abschnitt des Federwegs über der Hinterachse ist und j der Index für die Beladungssituation im Fahrgastraum ist. Bei der Summenbildung werden jedoch nur solche Abschnitte i berücksichtigt, für die gilt, dass $\Delta S_{HA} - \Delta S_{HA(i)}$ kleiner 0 ist.

Die Beladungssituation im Fahrgastraum kann anhand der Sitzbelegungssensoren 11 bestimmt werden, wobei bei obiger Summenbildung der entsprechende Gewichtungskoeffizient $k_{ij}$ für die aktuell bestimmte Beladungssituation j verwendet wird. Bevorzugt erfolgt diese Auswahl des Gewichtungskoeffizienten $k_{ij}$ nach einem im Voraus festgelegten Zeitintervall, nachdem das Fahrzeug in Bewegung gesetzt wurde, d.h. die Geschwindigkeit größer 0 war. Der Koeffizient $k_{ij}$ für diese Beladungssituation j wird dann für diese Fahrt beibehalten, auch wenn eine Person ihren Sitz verlässt oder ein Gurtschloss während der Fahrt geöffnet wird. Hierdurch können Fehlfunktionen aufgrund kurzzeitiger Störungen vermieden werden.

Schließlich berücksichtigt das Steuergerät 6 bei der Berechnung des Schwenkwinkels α für die Leuchtweitenregulierung des Scheinwerfers 1 dynamische Vorgänge des Fahrzeugs, das heißt die Fahrzeuggeschwindigkeit, die Beschleunigung und gegebenenfalls weitere zeitliche Ableitungen der Fahrzeuggeschwindigkeit. An Hand der aktuellen, von dem Geschwindigkeitsmesser 9 übertragenen Daten berechnet das Steuergerät 6 die Beschleunigung und gegebenenfalls weitere zeitliche Ableitungen. Diese Daten werden aktuell während der Fahrt gewonnen. An Hand der im Speicher 7 gespeicherten Daten kann das Steuergerät 6 nun einen dynamischen Korrekturwinkel $\Delta\alpha_{dyn}$ bestimmen, da dieser Korrekturwinkel in Abhängigkeit von den entsprechenden Parametern bereits im Voraus empirisch bestimmt worden ist und in dem Speicher 7 gespeichert ist. Falls der dynamische Korrekturwinkel $\Delta\alpha_{dyn}$ auch von der Fahrzeugbeladung und der Lastverteilung abhängig ist, kann bei der Bestimmung des dynamischen Korrekturwinkels $\Delta\alpha_{dyn}$ auch das aktuelle Signal des Höhensensors 10 beziehungsweise der Sitzbelegungssensoren 11 berücksichtigt werden.

Der fahrsituationsabhängige Schwenkwinkel α für den Fahrzeugscheinwerfer 1, der als Ausgangssignal von dem Steuergerät 6 an den Scheinwerfer 1 übertragen wird, berechnet sich wie folgt:

$$\alpha = \alpha_{stat} + \Delta\alpha_{dyn} + \Delta\alpha_{stat}$$

Der Motor 5 schwenkt an Hand dieses Ausgangssignals des Steuergeräts 6 die Lichtemissionsrichtung L um den vorgegebenen fahrsituationsabhängigen Neigungswinkel α.

**Bezugszeichenliste**

1    Scheinwerfer

2    Lichtquelle
3    Reflektor
4    Achse
5    Motor
6    Steuergerät
7    Speicher
8    Fahrzeugbus
9    Geschwindigkeitsmesser
10   Höhensensor
11   Sitzbelegungssensoren

**Patentansprüche**

1. Steuergerät (6) für einen Fahrzeugscheinwerfer (1), dessen Lichtemissionsrichtung (L) für eine Leuchtweitenregulierung um eine horizontale, zur Fahrrichtung senkrechte Achse (4) schwenkbar ist, wobei das Steuergerät (6) als Ausgangssignal einen Schwenkwinkel ($\alpha$) für die Lichtemissionsrichtung (L) des Fahrzeugscheinwerfers (1) ausgibt und wobei das Steuergerät (6) einen Speicher (7) aufweist, in dem im Voraus gewonnene fahrsituationsabhängige Daten gespeichert sind, welche Schwenkbewegungen des Fahrzeugs in Abhängigkeit von der Fahrzeuggeschwindigkeit und von zumindest der ersten zeitlichen Ableitung der Fahrzeuggeschwindigkeit charakterisieren, wobei das Ausgangssignal in Abhängigkeit von den im Voraus gespeicherten Daten berechenbar ist, **dadurch gekennzeichnet, dass** sich der von dem Steuergerät (6) berechnete Schwenkwinkel ($\alpha$) für die Leuchtweitenregulierung aus einem statischen Neigungswinkel ($\alpha_{stat}$), der sich aus der Höhe bei der Hinterachse des Fahrzeugs ergibt, einem statischen Korrekturwinkel ($\Delta\alpha_{stat}$), der sich aus der Sitzbelegung des Fahrzeugs ergibt, und einem dynamischen Korrekturwinkel ($\Delta\alpha_{dyn}$), der sich aus der Geschwindigkeit und zumindest einer zeitlichen Ableitung der Geschwindigkeit durch Verwendung der im Voraus gespeicherten Daten ergibt, zusammensetzt und dass sich der statische Korrekturwinkel ($\Delta\alpha_{stat}$) aus gewichteten Abschnitten (i) eines Federwegs des Fahrzeugs bei der Hinterachse ergibt, wobei die Gewichtungsfaktoren ($k_{ij}$) im Voraus gewonnen werden und von der Sitzbelegung (j) des Fahrzeugs abhängen.

2. Steuergerät nach Anspruch 1, **dadurch gekennzeichnet, dass** die Daten im Voraus für ein Fahrzeugmodell empirisch gewonnen werden.

3. Steuergerät nach einem der vorstehenden Ansprüche, **dadurch gekennzeichnet, dass** die im Voraus gewonnenen Daten ferner von der zweiten und/oder weiteren zeitlichen Ableitung(en) der Fahrzeuggeschwindigkeit abhängen und dass das Ausgangssignal in Abhängigkeit von den gespeicherten Daten berechenbar ist, die der aktuellen zweiten und/oder weiteren zeitlichen Ableitung(en) der Fahrzeuggeschwindigkeit zugeordnet sind.

4. Steuergerät nach einem der vorstehenden Ansprüche, **dadurch gekennzeichnet, dass** das Steuergerät (6) mit Sensoren (10, 11) gekoppelt ist, mit denen statische Daten aktuell erfassbar sind, und dass das Ausgangssignal in Abhängigkeit von den aktuellen statischen Daten dieser Sensoren (10, 11) berechenbar ist.

5. Steuergerät (6) nach Anspruch 1, **dadurch gekennzeichnet, dass** die Abschnitte i den Federweg über der Hinterachse aufteilen, wobei nur die Abschnitte (i) berücksichtigt werden, für die gilt, dass die Differenz des negativen Federwegs über der Hinterachse und der oberen Grenze des negativen Federwegs dieses Abschnitts (i) kleiner Null ist.

6. Steuergerät (6) nach Anspruch 1 oder 5, **dadurch gekennzeichnet, dass** der statische Korrekturwin- kel $\Delta\alpha_{stat}$ wie folgt berechnet wird:

$$\Delta\alpha_{stat} = \sum_{i=1}^{n} k_{ij} \cdot (\Delta S_{HA} - \Delta S_{HA(i)})$$

wobei n die Anzahl der Abschnitte ist, die den Federweg über der Hinterachse aufteilen, $k_{ij}$ ein im Vo- raus bestimmter Koeffizient für den i-ten Federwegabschnitt über der Hinterachse und die j-te Bela- dungssituation im Fahrgastraum, $\Delta S_{HA}$ die Ände- rung des Federweges über der Hinterachse ist, wo- bei $\Delta S_{HA}$ kleiner 0 ist, $\Delta S_{HA(i)}$ die obere Grenze für den i-ten Federwegabschnitt über der Hinterachse ist, *wobei, $\Delta S_{HA(i)}$* kleiner 0 ist, i der Index für den Abschnitt des Federwegs über der Hinterachse ist und j der Index für die Beladungssituation im Fahrgastraum ist und wobei bei der Summenbildung nur solche Abschnitte i berücksichtigt werden, für die gilt, dass $\Delta S_{HA} - \Delta S_{HA(i)}$ kleiner 0 ist.

7. Verfahren zur Steuerung eines Fahrzeugscheinwerfers (1), dessen Lichtemissionsrichtung (L) für eine Leuchtweitenregulierung um eine horizontale, zur Fahrrichtung senkrechte Achse (4) schwenkbar ist, bei dem

   - im Voraus fahrsituationsabhängige Daten, welche Schwenkbewegungen des Fahrzeugs in Abhängigkeit von der Fahrzeuggeschwindigkeit und von zumindest der ersten zeitlichen Ablei- tung der Fahrzeuggeschwindigkeit charakteri- sieren, gewonnen und in einem im Fahrzeug vorgesehenen Speicher (7) gespeichert wer-

den, und

- der Schwenkwinkel ($\alpha$) für die Lichtemissionsrichtung (L) des Fahrzeugscheinwerfers (1) in Abhängigkeit von den im Voraus gespeicherten Daten berechnet wird,

- statische Daten aktuell erfasst werden und der Schwenkwinkel ($\alpha$) für die Lichtemissionsrichtung (L) des Fahrzeugscheinwerfers (1) in Abhängigkeit von den aktuellen statischen Daten berechnet wird,

- der berechnete Schwenkwinkel ($\alpha$) für die Lichtemissionsrichtung (L) des Fahrzeugscheinwerfers (1) aus einem statischen Neigungswinkel ($\alpha_{stat}$), der sich aus dem Federweg der Hinterachse ergibt, einem statischen Korrekturwinkel ($\Delta\alpha_{stat}$), der sich aus der Sitzbelegung des Fahrzeugs ergibt, und einem dynamischen Korrekturwinkel ($\Delta\alpha_{dyn}$), der sich aus der Geschwindigkeit und zumindest einer zeitlichen Ableitung der Geschwindigkeit durch Verwendung der im Voraus gespeicherten Daten ergibt, zusammensetzt und

- für die Bestimmung des statischen Korrekturwinkels ($\Delta a_{stat}$) der Federweg des Fahrzeugs bei der Hinterachse in Abschnitte (i) unterteilt wird, die Abschnitte mit im Voraus gewonnenen, von der Sitzbelegung (j) des Fahrzeugs abhängigen Gewichtsfaktoren ($k_{ij}$) multipliziert werden und die derart gewichteten Abschnitte (i) des Federwegs addiert werden.

**8.** Verfahren nach Anspruch 7, **dadurch gekennzeichnet, dass** die Daten im Voraus für ein Fahrzeugmodell empirisch gewonnen werden.

**9.** Verfahren nach einem der Ansprüche 7 oder 8, **dadurch gekennzeichnet, dass** die im Voraus gewonnenen Daten ferner von der zweiten und/oder weiteren zeitlichen Ableitung(en) der Fahrzeuggeschwindigkeit abhängen, dass die zweite und/oder weitere zeitliche Ableitung(en) der Fahrzeuggeschwindigkeit berechnet wird und der Schwenkwinkel ($\alpha$) für die Lichtemissionsrichtung des Fahrzeugsscheinwerfers (1) in Abhängigkeit von den gespeicherten Daten berechnet wird, die der aktuellen zweiten und/oder weiteren zeitlichen Ableitung(en) der Fahrzeuggeschwindigkeit zugeordnet sind.

**10.** Verfahren nach Anspruch 7, **dadurch gekennzeichnet, dass** nur die Abschnitte (i) berücksichtigt werden, für die gilt, dass die Differenz des negativen Federwegs über der Hinterachse und der oberen Grenze des negativen Federwegs dieses Abschnitts kleiner 0 ist.

**11.** Verfahren nach Anspruch 7 oder 10, **dadurch gekennzeichnet, dass** der statische Korrekturwinkel $\Delta\alpha s_{tat}$ wie folgt berechnet wird:

$$\Delta\alpha_{stat} = \sum_{i=1}^{n} k_{ij} \cdot (\Delta S_{HA} - \Delta S_{HA(i)})$$

wobei n die Anzahl der Abschnitte ist, die den Federweg über der Hinterachse aufteilen, $k_{ij}$ ein im Voraus bestimmter Koeffizient für den i-ten Federwegabschnitt über der Hinterachse und die j-te Beladungssituation im Fahrgastraum, $\Delta S_{HA}$ die Änderung des Federweges über der Hinterachse ist, wobei $\Delta S_{HA}$ kleiner 0 ist, $\Delta S_{HA(i)}$ die obere Grenze für den i-ten Federwegabschnitt über der Hinterachse ist, wobei $\Delta S_{HA(i)}$ kleiner 0 ist, i der Index für den Abschnitt des Federwegs über der Hinterachse ist und j der Index für die Beladungssituation im Fahrgastraum ist und wobei bei der Summenbildung nur solche Abschnitte i berücksichtigt werden, für die gilt, dass $\Delta S_{HA} - \Delta S_{HA(i)}$ kleiner 0 ist.

**Claims**

**1.** Control device (6) for a vehicle headlamp (1), the direction (L) of light emission of which can be pivoted about a horizontal axis (4), perpendicular to the direction of travel, in order to perform headlamp range adjustment, wherein the control device (6) outputs, as an output signal, a pivoting angle ($\alpha$) for the direction (L) of light emission of the vehicle headlamp (1), and wherein the control device (6) has a memory (7) in which driving-situation-dependent data which has been acquired in advance is stored, said data characterizing pivoting movements of the vehicle as a function of the vehicle speed and of at least the first time derivative of the vehicle speed, wherein the output signal can be calculated as a function of the data stored in advance, **characterized in that** the pivoting angle ($\alpha$), calculated by the control device (6), for the headlamp range adjustment is composed of a static inclination angle ($\alpha_{stat}$) which is obtained from the height at the rear axle of the vehicle, a static correction angle ($\Delta\alpha_{stat}$) which is obtained from the seat occupation of the vehicle, and a dynamic correction angle ($\Delta\alpha_{dyn}$) which is obtained from the speed and from at least a time derivative of the speed by using the data stored in advance, and **in that** the static correction angle ($\Delta\alpha_{stat}$) is obtained from weighted sections (i) of a spring travel of the vehicle at the rear axle, wherein the weighting factors ($k_{ij}$) are acquired in advance and depend on the seat occupation (j) of the vehicle.

**2.** Control device according to Claim 1, **characterized in that** the data is acquired empirically in advance for a vehicle model.

3. Control device according to one of the preceding claims, **characterized in that** the data which is acquired in advance also depends on the second time derivative and/or further time derivatives of the vehicle speed, and **in that** the output signal can be calculated as a function of the stored data which is assigned to the current second time derivative and/or further time derivatives of the vehicle speed.

4. Control device according to one of the preceding claims, **characterized in that** the control device (6) is coupled to sensors (10, 11) with which static data can be acquired on an up to date basis, and **in that** the output signal can be calculated as a function of the current static data of these sensors (10, 11).

5. Control device (6) according to Claim 1, **characterized in that** the sections i divide the spring travel via the rear axle, wherein only the sections (i) for which the difference between the negative spring travel via the rear axle and the upper limit of the negative spring travel of this section (i) is less than zero are taken into account.

6. Control device (6) according to Claim 1 or 5, **characterized in that** the static correction angle $\Delta\alpha_{stat}$ is calculated as follows:

$$\Delta\alpha_{stat} = \sum_{i=1}^{n} k_{ij} \cdot (\Delta S_{HA} - \Delta S_{HA(i)}),$$

wherein n is the number of sections which divide the spring travel via the rear axle, $k_{ij}$ is a coefficient which is determined in advance for the i-th spring travel section via the rear axle and the j-th load situation in the passenger compartment, $\Delta S_{HA}$ is the change in the spring travel via the rear axle, wherein $\Delta S_{HA}$ is less than 0, $\Delta S_{HA(i)}$ is the upper limit for the i-th spring travel section via the rear axle, wherein $\Delta S_{HA(i)}$ is less than 0, i is the index for the section of the spring travel via the rear axle and j is the index for the load situation in the passenger compartment, and wherein during the formation of sums only sections i for which $\Delta S_{HA} - \Delta S_{HA(i)}$ is less than 0 are taken into account.

7. Method for controlling a vehicle headlamp (1), the direction (L) of light emission of which can be pivoted about a horizontal axis (4), perpendicular to the direction of travel, in order to perform headlamp range adjustment, in which method

    - driving-situation-dependent data which characterizes pivoting movements of the vehicle as a function of the vehicle speed and of at least the first time derivative of the vehicle speed is acquired in advance and stored in a memory (7) which is provided in the vehicle, and
- the pivoting angle ($\alpha$) for the direction (L) of light emission of the vehicle headlamp (1) is calculated as a function of the data stored in advance,
- static data is acquired on an up to date basis and the pivoting angle ($\alpha$) for the direction (L) of light emission of the vehicle headlamp (1) is calculated as a function of the current static data,
- the calculated pivoting angle ($\alpha$) for the direction (L) of light emission of the vehicle headlamp (1) is composed of a static inclination angle ($\alpha_{stat}$) which is obtained from the spring travel of the rear axle, a static correction angle ($\Delta\alpha_{stat}$) which is obtained from the seat occupation of the vehicle, and a dynamic correction angle ($\Delta\alpha_{dyn}$) which is obtained from the speed and at least a time derivative of the speed by using the data stored in advance, and
- in order to determine the static correction angle ($\Delta\alpha_{stat}$) the spring travel of the vehicle at the rear axle is divided into sections (i), the sections are multiplied by weighting factors ($k_{ij}$) which are acquired in advance and are dependent on the seat occupation (j) of the vehicle, and the sections (i) weighted in this way, of the spring travel are added.

8. Method according to Claim 7, **characterized in that** the data is acquired empirically in advance for a vehicle model.

9. Method according to one of Claims 7 or 8, **characterized in that** the data which is acquired in advance also depends on the second time derivative and/or further time derivatives of the vehicle speed, **in that** the second time derivative and/or further time derivatives of the vehicle speed are/is calculated and the pivoting angle ($\alpha$) for the direction of light emission of the vehicle headlamp (1) is calculated as a function of the stored data which is assigned to the current second time derivatives and/or further time derivatives of the vehicle speed.

10. Method according to Claim 7, **characterized in that** only the sections (i) for which the difference between the negative spring travel via the rear axle and the upper limit of the negative spring travel of this section is less than 0 are taken into account.

11. Method according to Claim 7 or 10, **characterized in that** the static correction angle $\Delta\alpha_{stat}$ is calculated as follows

$$\Delta\alpha_{stat} = \sum_{i=1}^{n} k_{ij} \cdot (\Delta S_{HA} - \Delta S_{HA(i)}) \, ,$$

wherein n is the number of sections which divide the spring travel via the rear axle, $k_{ij}$ is a coefficient which is determined in advance for the i-th spring travel section via the rear axle and the j-th load situation in the passenger compartment, $\Delta S_{HA}$ is the change in the spring travel via the rear axle, wherein $\Delta S_{HA}$ is less than 0, $\Delta S_{HA(i)}$ is the upper limit for the i-th spring travel section via the rear axle, wherein $\Delta S_{HA(i)}$ is less than 0, i is the index for the section of the spring travel via the rear axle, and j is the index for the load situation in the passenger compartment, and wherein during the formation of sums only sections i for which $\Delta S_{HA} - \Delta S_{HA(i)}$ is less than 0 are taken into account.

## Revendications

1. Appareil de commande (6) destiné à un phare de véhicule (1) dont la direction d'émission lumineuse (L) peut être amenée à pivoter autour d'un axe (4) horizontal et perpendiculaire à la direction de conduite pour un réglage de la distance d'éclairage, dans lequel l'appareil de commande (6) délivre en tant que signal de sortie un angle de pivotement ($\alpha$) pour la direction d'émission lumineuse (L) du phare de véhicule (1) et dans lequel l'appareil de commande (6) comprend une mémoire (7) dans laquelle sont stockées des données dépendant de la situation de conduite obtenues à l'avance qui caractérisent des mouvements de pivotement du véhicule en fonction de la vitesse du véhicule et d'au moins une dérivée première par rapport au temps de la vitesse du véhicule, dans lequel le signal de sortie peut être calculé en fonction des données stockées à l'avance,
**caractérisé en ce que** l'angle de pivotement ($\alpha$) calculé par l'appareil de commande (6) pour le réglage de la distance d'éclairage se compose d'un angle d'inclinaison statique ($\alpha_{stat}$) qui est déterminé à partir de la hauteur du véhicule au niveau de l'essieu arrière, d'un angle de correction statique ($\Delta\alpha_{stat}$) qui est déterminé à partir de l'occupation des sièges du véhicule, et d'un angle de correction dynamique ($\Delta\alpha_{dyn}$) qui est déterminé à partir de la vitesse et d'au moins une dérivée par rapport au temps de la vitesse par utilisation des données stockées à l'avance, et
**en ce que** l'angle de correction dynamique ($\Delta\alpha_{stat}$) est déterminé à partir de parties pondérées (i) d'une course de suspension du véhicule au niveau de l'essieu arrière, dans lequel les facteurs de pondération ($k_{ij}$) sont obtenus à l'avance et dépendent de l'occupation des sièges (j) du véhicule.

2. Appareil de commande selon la revendication 1, **caractérisé en ce que** les données sont obtenues à l'avance de manière empirique pour un modèle de véhicule.

3. Appareil de commande selon l'une quelconque des revendications précédentes, **caractérisé en ce que** les données obtenues à l'avance dépendent en outre de la dérivée seconde par rapport au temps et/ou d'autres dérivées par rapport au temps de la vitesse du véhicule et **en ce que** le signal de sortie peut être calculé en fonction des données stockées qui sont associées à la dérivée seconde instantanée par rapport au temps et/ou à d'autres dérivées instantanées par rapport au temps de la vitesse du véhicule.

4. Appareil de commande selon l'une quelconque des revendications précédentes, **caractérisé en ce que** l'appareil de commande (6) est couplé à des capteurs (10, 11) au moyen desquels des données statiques peuvent être détectées de manière instantanée et **en ce que** le signal de sortie peut être calculé en fonction des données statiques instantanées desdits capteurs (10, 11).

5. Appareil de commande (6) selon la revendication 1, **caractérisé en ce que** les parties i divisent la course de suspension sur l'essieu arrière, dans lequel les seules parties (i) prises en compte sont celles pour lesquelles la différence entre la course de suspension négative sur l'essieu arrière et la limite supérieure de la course de suspension négative de ladite partie (i) est inférieure à zéro.

6. Appareil de commande (6) selon la revendication 1 ou 5, **caractérisé en ce que** l'angle de correction statique $\Delta\alpha_{stat}$ est calculé comme suit :

$$\Delta\alpha_{stat} = \sum_{i=1}^{n} k_{ij} \cdot (\Delta S_{HA} - \Delta S_{HA(i)})$$

où n est le nombre des parties qui divisent la course de suspension sur l'essieu arrière, $k_{ij}$ est un coefficient déterminé à l'avance pour la i-ème partie de course de suspension sur l'essieu arrière et la j-ème situation de chargement dans l'habitacle, $\Delta S_{HA}$ est la variation de la course de suspension sur l'essieu arrière, $\Delta S_{HA}$ étant inférieur à 0, $\Delta S_{HA(i)}$ est la limite supérieure de la i-ème partie de la course de suspension sur l'essieu arrière, $\Delta S_{HA(i)}$ étant inférieur à 0, i est l'indice désignant la partie de la course de ressort sur l'essieu arrière, et j est l'indice désignant la situation de chargement dans l'habitacle et dans lequel, dans le calcul de la somme, seules sont prises en compte les parties i pour lesquelles $\Delta S_{HA}$ -

$\Delta S_{HA(i)}$ est inférieur à 0.

**7.** Procédé de commande d'un phare de véhicule (1) dont la direction d'émission lumineuse (L) peut être amenée à pivoter autour d'un axe (4) horizontal et perpendiculaire à la direction de conduite pour un réglage de la distance d'éclairage, dans lequel

- des données dépendant de la situation de conduite, qui caractérisent des mouvements de pivotement du véhicule en fonction de la vitesse du véhicule et d'au moins la dérivée première par rapport au temps de la vitesse du véhicule, sont obtenues et stockées à l'avance dans une mémoire (7) prévue dans le véhicule, et

- l'angle de pivotement ($\alpha$) est calculé pour la direction d'émission lumineuse (L) du phare de véhicule (1) en fonction des données stockées à l'avance,

- des données statiques instantanées sont détectées et l'angle de pivotement ($\alpha$) est calculé pour la direction d'émission lumineuse (L) du phare de véhicule (1) en fonction des données statiques instantanées,

- l'angle de pivotement ($\alpha$) calculé pour la direction d'émission lumineuse (L) du phare de véhicule (1) se compose d'un angle d'inclinaison statique ($\alpha_{stat}$) qui est déterminé à partir de la course de suspension de l'essieu arrière, d'un angle de correction statique ($\Delta\alpha_{stat}$) qui est déterminé à partir de l'occupation des sièges du véhicule, et d'un angle de correction dynamique ($\Delta\alpha_{dyn}$) qui est déterminé à partir de la vitesse et d'au moins une dérivée par rapport au temps de la vitesse par utilisation des données stockées à l'avance, et

- pour la détermination de l'angle de correction statique ($\Delta\alpha_{stat}$), la course de suspension du véhicule au niveau de l'essieu arrière est divisée en plusieurs parties (i), les parties sont multipliées par des facteurs de pondération ($k_{ij}$) déterminés à l'avance et dépendant de l'occupation des sièges (j) du véhicule et les parties ainsi pondérées (i) de la course de suspension sont additionnées.

**8.** Procédé selon la revendication 7, **caractérisé en ce que** les données sont obtenues à l'avance de manière empirique pour un modèle de véhicule.

**9.** Procédé selon l'une quelconque des revendications 7 à 8, **caractérisé en ce que** les données obtenues à l'avance dépendent en outre de la dérivée seconde par rapport au temps et/ou d'autres dérivées par rapport au temps de la vitesse du véhicule, **en ce que** la dérivée seconde par rapport au temps et/ou d'autres dérivées par rapport au temps de la vitesse du véhicule est/sont calculée(s) et l'angle de pivotement ($\alpha$), pour la direction d'émission lumineuse du phare de véhicule (1), est calculé en fonction des données stockées qui sont associées à la dérivée seconde instantanée par rapport au temps et/ou à d'autres dérivées instantanées par rapport au temps de la vitesse du véhicule.

**10.** Procédé selon la revendication 7, **caractérisé en ce que** les seules parties (i) prises en compte sont celles pour lesquelles la différence entre la course de suspension négative sur l'essieu arrière et la limite supérieure de la course de suspension négative de ladite partie est inférieure à zéro.

**11.** Procédé selon la revendication 7 ou 10, **caractérisé en ce que** l'angle de correction statique $\Delta\alpha_{stat}$ est calculé comme suit :

$$\Delta\alpha_{stat} = \sum_{i=1}^{n} k_{ij} \cdot (\Delta S_{HA} - \Delta S_{HA(i)})$$

où n est le nombre des parties qui divisent la course de suspension sur l'essieu arrière, $k_{ij}$ est un coefficient déterminé à l'avance pour la i-ème partie de course de suspension sur l'essieu arrière et la j-ème situation de chargement dans l'habitacle, $\Delta S_{HA}$ est la variation de la course de suspension sur l'essieu arrière, $\Delta S_{HA}$ étant inférieur à 0, $\Delta S_{HA(i)}$ est la limite supérieure de la i-ème partie de la course de suspension sur l'essieu arrière, $\Delta S_{HA(i)}$ étant inférieur à 0, i est l'indice désignant la partie de la course de ressort sur l'essieu arrière, et j est l'indice désignant la situation de chargement dans l'habitacle et dans lequel, dans le calcul de la somme, seules sont prises en compte les parties i pour lesquelles $\Delta S_{HA}$ - $\Delta S_{HA(i)}$ est inférieur à 0.

FIG.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2004196212 A
- DE 10235238 A1
- JP 09286274 A
- JP 10226271 A
- JP 2000142213 A
- JP 10230777 A
- JP 11034732 A
- JP 2004168130 A
- US 6229263 B1
- DE 4005812 C1
- DE 69707047 T2
- DE 10354212 A1
- DE 69710661 T2
- EP 1316474 A2